# FASCICULE DE BREVET EUROPEEN

(11) **EP 0 334 810 B1**
(45) Date de publication et mention de la délivrance du brevet: **21.04.1993**
(21) Numéro de dépôt: 89810205.8
(22) Date de dépôt: 15.03.1989
(51) Int. Cl.: B60B 39/00

(54) **Dispositif de positionnement et de fixation d'un dispositif de chaîne à neige auxiliaire pour véhicule routier**
Vorrichtung zum Ein- und Feststellen einer Hilfs-Gleitschutzkette für Kraftfahrzeuge
Positioning and fixing device for an auxiliary anti-skid chain of a vehicle

(30) Priorité: 25.03.1988 CH 1136/88
(43) Date de publication de la demande: 27.09.1989
(73) Titulaire: Beka St-Aubin SA, CH-2024 St-Aubin (CH)
(72) Inventeur:
(74) Mandataire: Fischer, Franz Josef

(56) Documents cités:
- EP-A- 0 195 973
- EP-A- 0 197 902

## Description

L'invention a pour objet un dispositif de positionnement et de fixation d'un dispositif de chaîne à neige auxiliaire destiné à être agencé sous un véhicule routier, ce dernier dispositif comprenant une cage abritant des moyens d'entraînement d'un bras de pivotement dont l'une des extrémités est solidaire desdits moyens d'entraînement et l'autre extrémité pourvue d'une roulette comportant des brins de chaîne, ledit bras pouvant occuper une position dégagée et une position en prise lors de laquelle la roulette, s'appuyant contre le flanc intérieur de la roue du véhicule, doit être située dans un plan bien déterminé par rapport à ladite roue.

Le positionnement et la fixation des dispositifs à chaîne soulèvent plusieurs problèmes liés les uns aux autres. On peut citer d'abord celui du choix des moyens mis en oeuvre pour garantir une fixation vraiment fiable, compte tenu des sollicitations importantes auxquelles ces moyens sont soumis lorsque le dispositif de chaîne est mis en action. Ensuite, il est souhaité que lesdits moyens facilitent le montage du dispositif. Enfin, se greffe directement sur ces problèmes premiers celui du positionnement du dispositif de chaîne à neige et, corrélativement, celui de l'ajustement de la roulette, la position de celle-ci par rapport au flanc intérieur de la roue contre laquelle elle doit s'appuyer devant satisfaire certaines conditions. En effet, l'approche successive vers la position idéale de la roulette est faite notamment par intervention sur les moyens de positionnement et de fixation du dispositif de chaîne à neige.

Dans les dispositifs connus, entre autres celui décrit dans le document EP-A-0 197 902, la fixation est effectuée au moyen, entre autres, de tubes ou/et barres ou/et manchons et coquilles ou/et brides et supports, ceci après de délicates opérations de positionnement de tous ces éléments les uns par rapport aux autres.

Aussi, le montage des dispositifs connus dans l'état de la technique est très fastidieux et coûteux, l'approche successive de la position définitive de la cage et de la roulette étant rendue très difficile.

De manière générale, sur certains dispositifs connus, l'ajustement final de la roulette par rapport à la roue du véhicule est obtenu par intervention sur des moyens spécifiques, tels que rotules, aménagés dans la zone de liaison du bras de pivotement et de ladite roulette.

Cependant, on continue d'observer que ni les moyens de positionnement, ni ceux de fixation connus du dispositif de chaîne à neige, notamment en ce qui concerne la fiabilité, ne donnent satisfaction. En particulier, compte tenu des importantes sollicitations dynamiques, les couples de serrage doivent être très élevés si l'on veut que le dispositif reste bien en place. Mais d'un autre côté, la corrosion aidant, on constatera après peu de temps le grippage des organes entre eux. Ainsi, une intervention ultérieure sur le dispositif, lorsque par exemple un réajustement du positionnement de la roulette s'avère nécessaire, devient vite problématique.

La présente invention constitue un perfectionnement des dispositifs développés par la requérante et ayant déjà fait l'objet des demandes EP-A-278 896 et EP-A-278 899 auxquelles on peut se reporter. Le dispositif de positionnement et de fixation selon l'invention apporte une solution décisive aux difficultés exposées, grâce à l'enseignement donné dans la partie caractérisante de la revendication 1.

Le problème de positionnement du dispositif et d'ajustement de la roulette contre le flanc intérieur de la roue du véhicule dont il faut éviter le patinage, ainsi que celui de sa fixation et de son blocage, sont ainsi résolus de manière élégante et véritablement fiable. En outre, les travaux de montage, tout comme ceux des interventions ultérieures éventuelles, sont considérablement facilités. Enfin, les moyens spécifiques coûteux en vue de l'ajustement final de la roulette ne s'avèrent pas nécessaires.

Ces avantages se dégageront de la description qui va suivre de l'invention, à l'aide du dessin annexé où
la fig. 1 est un schéma d'ensemble de l'invention,
la fig. 2 est une vue de dessus de la cage de l'invention,
la fig. 3 est une coupe partielle selon la ligne III-III de la fig. 2, avec les moyens de fixation,
la fig. 4 est une coupe partielle analogue à celle de la fig. 3,

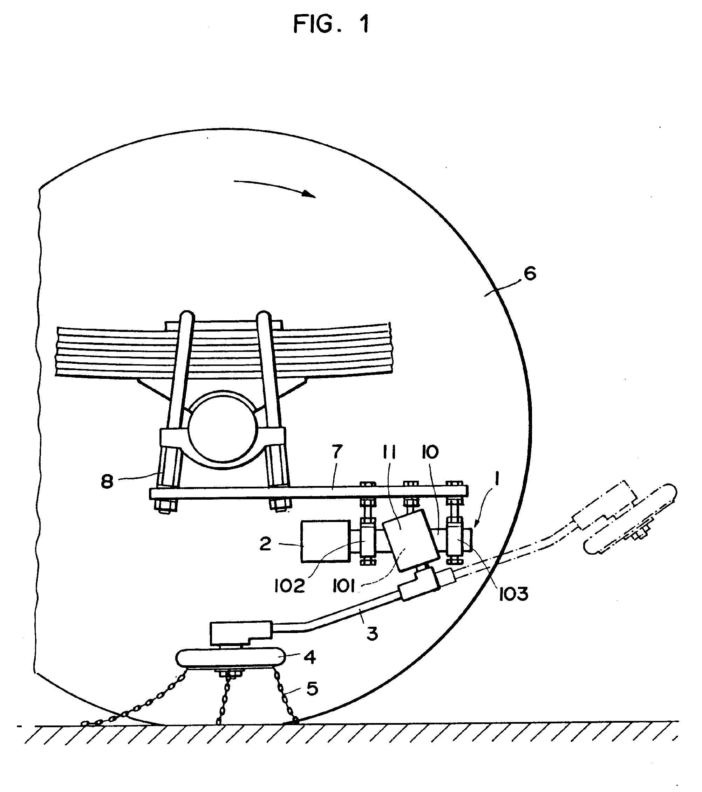

La fig. 1 montre schématiquement un exemple de montage du dispositif de chaîne à neige dans l'agencement d'ensemble. La cage 1 abrite les organes d'entraînement du bras 3 fixé, à l'une de ses extrémités, à un axe émergeant de la partie 11 de la cage 1 et munie, à l'autre extrémité, d'une roulette 4 pouvant s'appuyer contre le flanc intérieur de la roue 6 du véhicule et pourvue de brins de chaîne 5.

Dans l'exemple représenté, la cage comporte trois emplacements de fixation 101, 102 et 103 coopérant avec des organes de fixation, de telle sorte que la cage soit solidaire d'éléments du véhicule sous lequel le dispositif de chaîne à neige est agencé, tel que essieu trompe ou, comme dans l'exemple montré, bride de lame de suspension 8, par l'intermédiaire d'un élément auxiliaire, ici une plaque rigide 7. Dans la plupart des cas, compte tenu de la variété de types de véhicules existants, un élément intermédiaire 7, sans devoir être nécessairement une plaque, devra être prévu, même si la cage 1 telle que conçue n'exclut pas la possibilité d'une fixation directe.

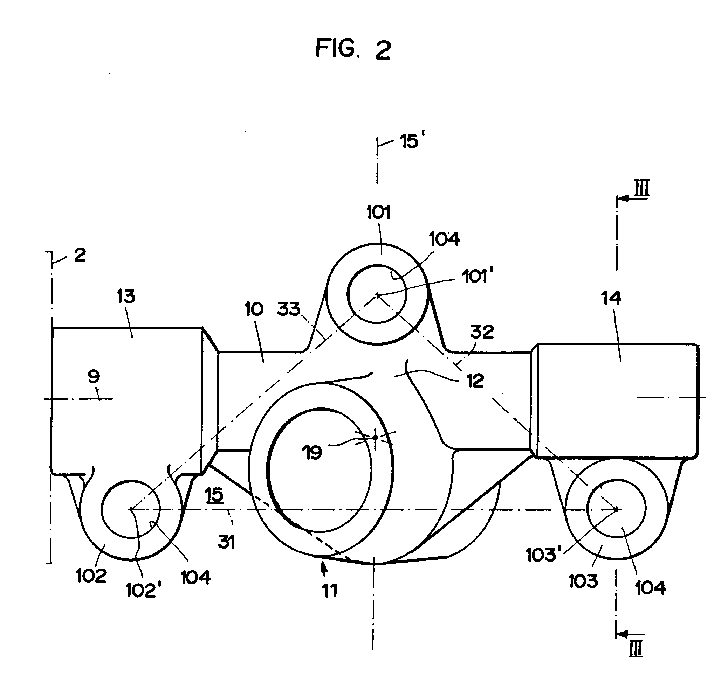

La fig. 2 représente une vue de dessus d'une forme d'exécution de la cage 1 abritant les moyens d'entraînement du bras de roulette/de pivotement 3. On adoptera de préférence la conception du dispositif de chaîne à neige développé par la requérante et exposé dans la demande EP-A-278 896: Ainsi la cage présente un corps 10, de forme générale allongée, d'axe longitudinal 9; la zone médiane du corps 10 comporte un corps 11, disposé obliquement, l'axe de celui-ci, non repéré, formant avec l'axe longitudinal 9 un angle α respectivement 180° -α. La cage 1 est avantageusement une pièce de fonderie. Une crémaillère peut se déplacer dans le corps 10, sous l'action des moyens d'actionnement - constitués par exemple d'un dispositif de piston hydraulique à simple ou double effet - abrités par une cage 2 située dans le prolongement du corps 10. La crémaillère est en prise avec un pignon abrité dans le corps 11, duquel émerge un axe auquel est fixé le bras de roulette/de pivotement 3. Tous ces moyens ne sont pas représentés sur la figure. Ils ne sont évoqués qu'à titre indicatif, le dispositif de fixation pouvant être adopté sur tous autres dispositifs de chaîne à neige auxiliaire.

La cage 1 comporte en trois endroits - à savoir, d'une part, aux deux extrémités 13 et 14 du corps 10, et, d'autre part, dans la zone médiane 12 dudit corps, resp. dans la zone du plan médian de trace 15' perpendiculaire à l'axe longitudinal 9, à l'opposé du corps 11 - des emplacements de suspension 102, 103, 101, c'est-à-dire de fixation de la cage 1 sous le véhicule. Ainsi, ces emplacements disposés alternativement de part et d'autre de l'axe longitudinal 9 constituent une suspension triangulaire.

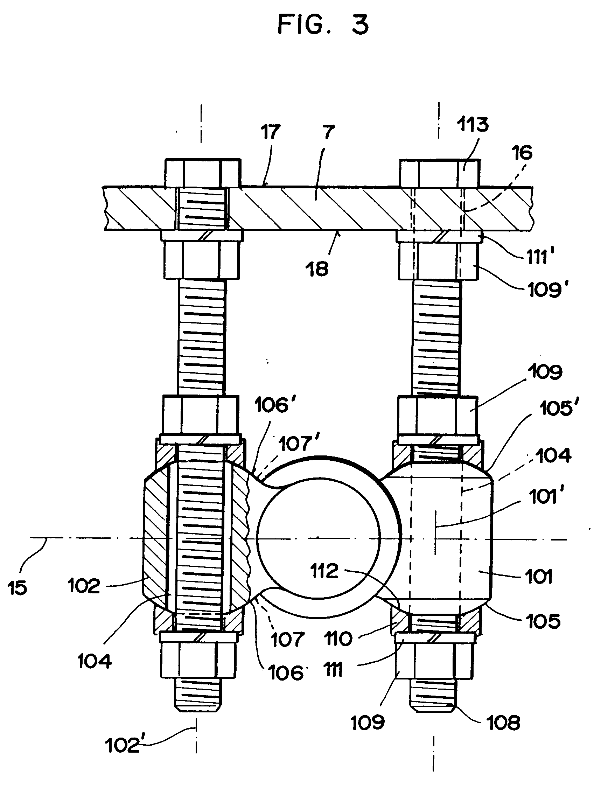

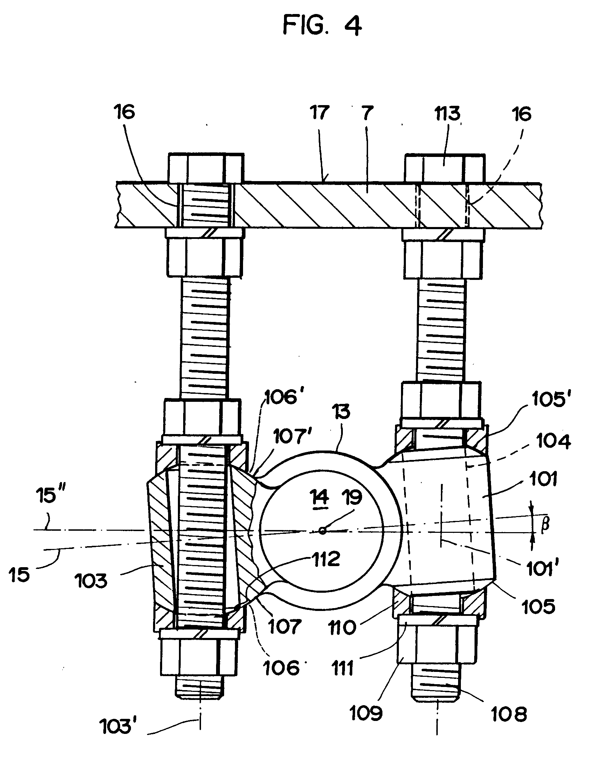

Les conformations particulières de ces emplacements de suspension - que l'on appellera lunettes 101, 102, 103 - sont décrites également à l'appui des fig. 3 et 4, qui sont des coupes partielles selon la ligne III-III de la fig. 2, représentant la cage 1 dans deux positions distinctes. On n'a cependant pas représenté, sur les fig. 3 et 4, le corps 11 de la cage 1. Les lunettes 101, 102, 103 sont reliées au corps 10 par des nervures non référencées; l'ensemble 10, 11, 101, 102, 103 peut être mécano-soudé, mais on préférera, comme déjà indiqué, une pièce de moulage. Chaque lunette 101, 102, 103 est constituée d'un tronc cylindrique d'axe respectif 101', 102', 103' et présente un alésage central 104. Ces axes sont tous orthogonaux à l'axe longitudinal 9 et, de préférence, parallèles entre eux; de même, dans l'exemple, chaque lunette présente une forme générale identique à celle des deux autres. Une particularité fondamentale réside dans la conformation arrondie des faces inférieures et supérieures 105, 105' (lunette 101), 106 et 106' (lunette 102) et 107, 107' (lunette 103), dont l'utilité sera aisément comprise plus loin. On voit dans la variante décrite que les faces sont bombées, c'est-à-dire convexes; le rayon de courbure est situé à l'intérieur de la lunette, et choisi au point d'intersection entre le plan médian 15 (fig. 3) et l'axe respectif 101', 102', 103' de la lunette. Bien entendu, on pourrait également opter pour des faces concaves ou même alternativement concaves/convexes. Dans tous les cas cependant, on choisira le même rayon de courbure.

Le mode de fixation de la cage 1 va être montré maintenant en nous référant uniquement, pour simplifier, à la lunette 101. L'extrémité d'une tige filetée ou d'une vis 108 traverse l'alésage 104 de la lunette 101 de part en part. Le diamètre de l'alésage 104 est sensiblement supérieur au diamètre de la vis 108. De part et d'autre de la lunette, un écrou 109, une rondelle-frein 111 et un élément intercalaire 110 permettent le blocage de la lunette, et donc de la cage 1, par serrage des écrous 109 sur les deux faces respectives de la lunette. Il est clair que la surface 112 de l'élément intercalaire 110, directement adjacente à la face 105 respectivement 105', doit correspondre à cette face; en d'autres termes, la courbure sera identique.

A l'extrémité opposée, la vis 108 traverse un alésage 16 pratiqué dans l'élément auxiliaire, en l'occurrence la plaque 7. La vis 108 est rendue solidaire de la plaque 7 par l'action de la tête de vis 113 s'appuyant sur la face supérieure 17 de la plaque 7 et du contre-écrou 109'. Une rondelle-frein 111', placée entre la face inférieure 18 de la plaque 7 et l'écrou 109', procurera une meilleure garantie du blocage. D'autres moyens analogues de fixation peuvent être mis en oeuvre. La plaque 7 enfin est solidaire d'un ou plusieurs organes du véhicule, ainsi qu'il a déjà été dit plus haut.

La cage 1 ainsi conçue permettra, de manière idéale, de positionner le dispositif de chaîne à neige avant son blocage définitif (fig. 4) : dans un premier temps, le dispositif est mis en place de façon approximative, c'est-à-dire que l'on s'assurera que la roulette 4, en position de travail, donc placée contre le flanc intérieur de la roue 6 du véhicule, est située dans un plan se rapprochant du plan idéal prédéterminé.

Dans un second temps, on procédera au positionnement fin et par là même, à l'ajustement final de la roulette dans le plan précité. Pour cela, on agira sur les écrous de fixation 109 des lunettes, de manière à modifier l'orientation du plan médian 15 rapport à un plan horizontal (par exemple le plan horizontal 15") et, corrélativement, celle du plan de la roulette 4. Lorsque la position idéale est atteinte, on bloquera la cage 1 par serrage, chaque fois des écrous 109 sur les faces respectives supérieures et inférieures des lunettes.

On constate en effet que, grâce à la coopération des trois particularités essentielles de construction de la cage 1, à savoir la conformation spécifique des lunettes 101, 102, 103, d'une part, la suspension triangulaire 101', 102', 103' de la cage 1, de seconde part, le dimensionnement de l'alésage 104, quant à son diamètre, par rapport au diamètre de la vis 108, de tierce part, la cage 1, respectivement le plan médian 15, peut être "basculée" d'un angle β, dans toutes les directions radiales par rapport à un plan horizontal, par exemple 15" (fig. 4). Sur la fig. 2, à titre indicatif, on a représenté en trait mixte fin un triangle d'arêtes 31, 32, 33. Ce triangle est situé dans le plan médian 15, ses sommets sont constitués par les intersections de ce plan avec les axes 101', 102' et 103'. Le "basculement" de la cage 1, c'est-à-dire le positionnement de celle-ci, peut être obtenu de plusieurs manières. On peut par exemple supposer que l'on doive uniquement agir sur la lunette 101, en la faisant monter ou descendre, selon les besoins, à l'aide de l'ensemble vis-écrou 108, 109, et que l'on ne souhaîte pas varier la position des lunettes 102 et 103, Dans ce cas, (bien entendu, les écrous 109 des lunettes 102 et 103 étant juste desserrés), la cage 1, resp. le plan médian 15 matérialisé par le triangle 31, 32, 33, tournera autour de l'axe 31, les lunettes 102, 103 remplissant le rôle de rotules. De manière analogue, le plan 15 peut basculer autour des axes 32 ou 33. Lorsque, par contre, on agit simultanément sur les trois lunettes, le plan médian 15, c'est-à-dire le triangle 31, 32, 33, va pouvoir pivoter dans toutes les directions autour de l'horizontale. Tous ces plans, quelles que soient leurs orientations, passeront par un point 19, qui est le barycentre du triangle 31, 32, 33 (fig. 2). Par ailleurs, comme on l'aperçoit sur la figure, ce point peut lui-même se déplacer en hauteur, parallèlement aux axes 101', 102', 103'. Selon la construction des emplacements de suspension, c'est-à-dire de la disposition des lunettes 101, 102, 103, ce point 19 peut se trouver sur l'axe longitudinal 9, ainsi qu'on l'a représenté sur la fig. 4. En ce qui concerne les valeurs de β et à titre indicatif, pour un alésage 104 de diamètre 21 mm et une vis 108 de diamètre 16 mm, et pour une hauteur de lunette de 55 mm, le dit angle β pourra varier dans un intervalle de 0° à 5° environ.

Le dispositif de chaîne à neige auxiliaire pourvu d'un dispositif de positionnement et de fixation tel que décrit peut être monté sur tous types de véhicule. Pour les véhicules légers, on adoptera bien entendu un bras de pivotement dont la longueur sera inférieure à celle qui est prévue pour bras montés sur véhicules lourds. De même, le diamètre des vis de fixation, ainsi que des rondelles correspondantes (c'est-à-dire des organes analogues à ceux désignés plus haut par 108, 109, 110, 111) seront adaptés. On peut ainsi choisir des vis de diamètre 12 mm par exemple.

La présente invention répond de façon optimale à tous les problèmes exposés en introduction. Elle allie véritablement la précision du positionnement du dispositif de chaîne à neige et par là même celle de l'ajustement de la roulette dans le plan idéal, la fiabilité de la fixation, la facilité de montage, la rationalité de la construction.

## Revendications

1. Dispositif de positionnement et de fixation d'un dispositif de chaîne à neige auxiliaire destiné à être agencé sous un véhicule routier, comprenant une cage (1) et un bras de pivotement (3) dont l'une des extrémités est solidaire desdits moyens d'entraînement et l'autre extrémité pourvue d'une roulette (4) comportant des brins de chaîne (5), ledit bras pouvant occuper une position dégagée et une position en prise lors de laquelle la roulette s'appuyant sur le flanc intérieur de la roue (6) du véhicule, doit être située dans un plan bien déterminé par rapport à ladite roue, la cage (1), présentant une forme générale allongée d'axe longitudinal (9), comportant des emplacements de suspension (101, 102, 103) présentant chacun une conformation définie, lesquelles conformations coopèrent chacune avec un ou plusieurs organes de blocage et de fixation (108, 109, 110, 111) et permettent, dans le même temps, aussi bien la solidarisation directe ou indirecte du dispositif de chaîne à neige sous le véhicule et son positionnement, que l'ajustement de la roulette dans le plan déterminé, caractérisé en ce que la cage (1) abrite des moyens d'entraînement du bras de pivotement (3), et que lesdits emplacements de suspension (101, 102, 103), au nombre de trois, sont disposés alternativement de part et d'autre de l'axe longitudinal (9) et présentent chacun la forme d'une lunette pourvue d'un alésage (104), les axes (101', 102', 103') desdits allésages étant orthogonaux à l'axe longitudinal (9) et de préférence parallèles entre eux, le diamètre de l'alésage (104) de chaque lunette est choisi, par rapport au diamètre de l'élément fileté (108), de telle sorte que le plan médian (15) de la cage puisse être basculé d'un angle β, dans toutes les directions radiales par rapport à un plan horizontal.

2. Dispositif selon la revendication 1, caractérisé en ce que l'une (101) des trois lunettes est disposée partiellement dans la zone du plan médiant (15') perpendiculaire à l'axe longitudinal (9), d'un côté de celui-ci, les deux autres (102, 103) sont disposés de l'autre côté de l'axe longitudinal, l'une (103) à l'extrémité avant, l'autre (102) à l'extrémité arrière de la cage (1).

3. Dispositif selon l'une des revendications 1 ou 2, caractérisé en ce que les zones supérieures et inférieures (105, 105'; 106, 106'; 107, 107') des lunettes (101, 102, 103) présentent chacune une conformation arrondie, toutes ces faces étant soit concaves, soit convexes, soit alternativement concaves/convexes.

4. Dispositif selon la revendication 3, caractérisé en ce que chaque organe de fixation et de blocage coopérant avec la lunette correspondante est constitué d'un élément fileté (108) fixé, à sa partie supérieure, au véhicule, directement ou par des moyens auxiliaires, et traversant, à sa partie inférieure, l'alésage (104) de la lunette, ainsi que d'éléments de blocage (109, 110, 111) serrés sur les faces supérieure et inférieure de la lunette.

5. Dispositif selon la revendication 4, caractérisé en ce que les éléments de blocage, de part et d'autre de la lunette, sont constitués chaque fois d'un écrou (109), d'une rondelle-frein (111) et d'au moins un élément intercalaire (110) dont la forme de la surface (112) adjacente aux faces supérieures et inférieures de la lunette correspond à la forme concave ou convexe des faces adjacentes respectives de la lunette.

6. Dispositif selon la revendication 5, caractérisé en ce que la cage (1) ainsi que les éléments de fixation et de blocage de la dite cage sont solidaires du véhicule par l'intermédiaire d'au moins un élément auxiliaire (7).

7. Dispositif selon la revendication 6, caractérisé en ce que ledit élément auxiliaire est une plaque rigide (7).

## Patentansprüche

1. Vorrichtung zum Ein- und Feststellen einer Hilfs-Gleitschutzkette, deren Anordnung unter einem Kraftfahrzeug vorgesehen ist, welche Vorrichtung ein Gestell (1) und einen Schwenkarm (3), dessen eines Ende an den genannten Antriebsmitteln befestigt ist und an dessen anderem Ende eine Rolle (4) vorgesehen ist, welche die Enden der Ketten (5) trägt, enthält, wobei der genannte Arm eine freie Position und eine Eingriffsposition einnehmen kann, bei welcher Eingriffsposition sich die Rolle auf der inneren Flanke des Rades (6) des Fahrzeuges abstützt und in einer bezüglich des genannten Rades genau festgelegten Ebene liegen muss, und das Gestell (1), welches eine allgemeine in longitudinaler Achse sich erstreckende Form aufweist, Aufhängungspunkte (101, 102, 103) umfasst, wovon jeder eine bestimmte Beschaffenheit hat, welche jede mit einem oder mehreren Blockierorganen und Befestigungsorganen (108, 109, 110, 111) zusammenwirken, und gleichzeitig sowohl die direkte oder indirekte Befestigung und die Einstellung der Schneekette unter dem Fahrzeug, wie auch die Einstellung der Rolle in der vorbestimmten Ebene ermöglicht, dadurch gekennzeichnet, dass das Gestell (1) Antriebsmittel für den Schwenkarm (3) aufweist, und dass die Aufhängepunkte, wovon drei vorgesehen sind, abwechselnd beidseits der longitudinalen Achse (9) angeordnet sind, und jeder die Form einer mit einer Bohrung (104) versehenen Lasche aufweist, wobei die Achsen (101', 102', 103') der genannten Bohrungen rechtwinklig zur longitudinalen Achse (9) und bevorzugt parallel zueinander stehen, und der Durchmesser der Bohrung (104) jeder Lasche bezüglich des Durchmessers des mit Gewinde versehenen Elementes (108) so gewählt ist, dass die mittlere Ebene (15) des Gestelles in allen radialen Richtungen bezüglich einer horizontalen Ebene um einen Winkel β kippbar ist.

2. Vorrichtung nach Anspruch 1, dadurch gekennzeichnet, dass eine (101) der drei Laschen partiell im Bereich der mittleren Ebene (15') und auf einer Seite und senkrecht zur longitudinalen Achse (9) angeordnet ist, während die beiden anderen Laschen (102, 103) auf der anderen Seite der longitudinalen Achse angeordnet sind, eine am vorderen Ende, die andere am hinteren Ende des Gestelles (1).

3. Vorrichtung nach einem der Ansprüche 1 oder 2, dadurch gekennzeichnet, dass jeder der oberen und unteren Bereiche (105, 105'; 106, 106'; 107, 107') der Laschen (101, 102, 103) eine abgerundete Form aufweist, wobei die Oberflächen konkav, konvex oder abwechslungsweise konkav/konvex sind.

4. Vorrichtung nach Anspruch 3, dadurch gekennzeichnet, dass jedes Befestigungs- und Blockierorgan, welches mit der entsprechenden Lasche zusammenwirkt, aus einem mit Gewinde versehenen Element (108) besteht, welches mit seinem oberen Bereich direkt oder durch Hilfsmittel am Fahrzeug befestigt ist, und welches in seinem unteren Bereich die Bohrung (104) der Lasche sowie die Blockierelemente (109, 110, 111) durchdringt, welche auf die obere und untere Fläche der Lasche festgezogen sind.

5. Vorrichtung nach Anspruch 4, dadurch gekennzeichnet, dass die Blockierelemente beiderseits der Lasche jedesmal aus einer Schraubenmutter (109), einer federnden Unterlagscheibe (111) und mindestens einem eingeschobenen Element (110), dessen Form der Oberfläche (112), die der oberen und unteren Fläche der Lasche benachbart ist, der konkaven oder konvexen Form der entsprechenden benachbarten Flächen der Lasche entsprechen, bestehen.

6. Vorrichtung nach Anspruch 5, dadurch gekennzeichnet, dass das Gestell (1) sowie die Befestigungs- und Blockierelemente des genannten Gestells über mindestens ein Hilfselement (7) am Fahrzeug befestigt sind.

7. Vorrichtung nach Anspruch 6, dadurch gekennzeichnet, dass das genannte Hilfselement eine starre Platte (7) ist.

## Claims

1. Positioning and fixing device for an auxiliary anti-skid chain intended to be used on a motor vehicle, comprising a cage (1), and a pivot arm (3) one end of which is integral with the said traction mechanism and the other end equipped with a small wheel (4) having lengths of chain (5), said arm being able to occupy a disengaged position and an engaged position when the little wheel rests against the inner sidewall of the wheel (6) of the vehicle, having to be situated in a plane well determined with respect to the said wheel, the cage (1) having a generally elongated shape with a longitudinal axis (9) comprising suspension locations (101, 102, 103), each having a defined conformation, each one of the conformations cooperating with one or several locking elements (108, 109, 110, 111) and permitting at the same time the direct or indirect interconnection of the anti-skid chain to the vehicle and its positioning, and the adjustment of the little wheel in the determined plane, characterized in that the cage (1) houses the traction mechanism of the pivot arm (3), and the said suspensions locations (101, 102, 103), numbering three, are disposed alternately on both sides of the longitudinal axis (9) and each having the form of a cap or lug provided with a bore (104), the axes (101', 102', 103') of the said bores being orthogonal to the longitudinal axis (9) and preferably parallel to one another, the diameter of the bore (104) of each lug is chosen, relative to the diameter of the threaded element (108), in such a way that the center plane (15) of the cage can be tilted by an angle in all radial directions relative to a horizontal plane.

2. Device according to claim 1, characterized in that one (101) of the three lugs is disposed partially in the zone of central plane (15') perpendicular to the longitudinal axis (9), on one side of the latter, the two other lugs (102, 103) being disposed on the other side of the longitudinal axis, one (103) at the front end, the other (102) at the back end of the cage.

3. Device according to one of the claims 1 or 2, characterized in that the upper and lower zones (105, 105'; 106, 106'; 107, 107') of the lugs (101, 102, 103) each has a rounded conformation, all the faces being either concave, or convex or alternately concave/convex.

4. Device according to claim 3 characterized in that each fixing and locking element cooperating with a corresponding lug is comprised of a threaded element (108) fixed in its upper part to the vehicle, directly or by auxiliary means, and passing at its lower part through the bore (104) of the lug, and of the locking elements (109, 110, 11) tightened against the upper and lower faces of the lug.

5. Device according to claim 4 characterized in that the locking elements, on both sides of said lug, are comprised each time of a nut (109), a spring washer (111), and at least one interposed elements (110), the shape of the surface of said interposed element adjacent to the upper or lower faces of the lug corresponding to the concave or convex shape of the respective adjacent faces of the lug.

6. Device according to claim 5, characterized in that the cage (1) and the fixing and locking elements of said cage are integral with the vehicle via at least one auxiliary element (7).

7. Device according to claim 6, characterized in that the said auxiliary element is a rigid plate (7).
